# EUROPÄISCHE PATENTSCHRIFT

(11) **EP 2 500 379 B1**
(45) Veröffentlichungstag und Bekanntmachung des Hinweises auf die Patenterteilung: **26.02.2014**
(21) Anmeldenummer: 11305276.5
(22) Anmeldetag: 15.03.2011
(51) Int. Cl.: C08L 23/08, H01B 7/29

(54) **Halogenfreier Kernbeilauf für Kabel**
Halogen-free core filler for cable
Bourrage de noyau sans halogène pour câble

(43) Veröffentlichungstag der Anmeldung: 19.09.2012
(73) Patentinhaber: Nexans, 75008 Paris (FR)
(72) Erfinder: Ulfig, Peter, 54552, Mehren (DE); Dr. Cornelissen, Christian, 41238, Mönchengladbach (DE)
(74) Vertreter: Döring, Roger

(56) Entgegenhaltungen:
- US-A1- 2005 058 795
- US-A1- 2005 137 306

## Beschreibung

Die Erfindung betrifft einen halogenfreien Kernbeilauf für Kabel und ein Kabel bzw. eine Leitung mit einem solchen halogenfreien Kernbeilauf, sowie ein Verfahren zur Herstellung des Kernbeilaufs bzw. ein Verfahren zur Herstellung eines Kabels mit dem erfindungsgemäßen Kernbeilauf.

### Stand der Technik

Die EP 1041585 B1 beschreibt eine flexible elektrische Starkstromleitung, die einen zentralen Kernbeilauf aufweist, um den herum Adern zur Stromführung angeordnet sind. Der Kernbeilauf besteht aus vernetzbarem Polymer, insbesondere aus Gummi. Die US 2005/058795 offenbart Ethylen-Vinylacetat-Zusammensetzungen mit ≥ 40 Gew.-% Vinylacetat-Einheiten.

### Aufgabe der Erfindung

Die Aufgabe der Erfindung liegt in der Bereitstellung eines Kernbeilaufs für ein Kabel, der bei Erwärmung des Kabels, beispielsweise im Brandfall auf Temperaturen von 600 bis 900 °C, zur Aufrechterhaltung der Funktionsfähigkeit des Kabels beiträgt.

### Allgemeine Beschreibung der Erfindung

Die Erfindung löst die Aufgabe mit den Merkmalen der Ansprüche, und insbesondere mit einem Kernbeilauf, der eine Polymermischung mit mineralischen Zuschlagsstoffen enthält, die bei Erwärmung bspw. auf 600 °C ein mechanisch stabiles Erhitzungsprodukt, auch als Asche bezeichnet, bildet, das beispielsweise für zumindest 30 min, bevorzugt zumindest 90 min die Leiter des Kabels voneinander separiert und daher die Funktionsfähigkeit des Kabels auch im Erhitzungs- oder Brandfall aufrechterhält. Neben der mechanischen Stabilität des Erhitzungsprodukts des Kernbeilaufs wird die Funktionsfähigkeit des Kabels dadurch im Brandfall aufrechterhalten, dass der Kernbeilauf bei der Erwärmung eine Volumenzunahme erfährt, vorzugsweise um 55 bis mindestens 81%, bevorzugter zumindest 70% bei einer Erwärmung auf 600 °C, bzw. eine Volumenzunahme um mindestens 60%, bevorzugter mindestens 70% bis 81 % bei einer Erwärmung auf 900 °C.

Aufgrund der Aufrechterhaltung der Isolierung der stromführenden Leiter voneinander auch im Brandfall für z.B. 30 bis 90 min betrifft die Erfindung auch die Verwendung erfindungsgemäßer Kabel in öffentlichen Gebäuden, zivilen Schiffen, Marineschiffen, Eisenbahnen und anderen Bereichen mit erhöhten Anforderungen an die Sicherheit im Brandfall , z.B. als Sicherheitskabel, Schiffskabel, Marinekabel oder Lokomotivkabel mit Funktionsfähigkeit auch bei Erwärmung auf 600 bis 900 °C für zumindest 30 min, bevorzugt für zumindest 90 min.

Ein Kabel mit einem erfindungsgemäßen Kernbeilauf aus der erfindungsgemäßen Polymermischung weist bevorzugt zumindest drei Adern auf, die um einen Kernbeilauf angeordnet bzw. verseilt sind. Ein Kabel mit zwei Adern kann innerhalb eines Mantels zwei mit den Adern verseilte erfindungsgemäße Kernbeiläufe aufweisen. Für Sicherheitskabel mit einem Kernbeilauf aus der erfindungsgemäßen Polymermischung ist bevorzugt, dass diese um die verseilten Adern einen Innenmantel aufweisen und einen den Innenmantel umfassenden Außenmantel, wobei optional ein Metallgeflecht zwischen Innenmantel und Außenmantel liegt.

Die Bestandteile der Polymermischungen sind in phr (parts per hundred rubber) angegeben, d.h. die Gewichtsteile der Bestandteile sind auf 100 Gewichtsteile organischer Polymere bezogen.

Der erfindungsgemäße Kernbeilauf, der optional zumindest ein axial angeordnetes Trägerelement, beispielsweise aus einem oder mehreren Glasfäden, die weiter optional von Aramidfäden umgeben sein können, aufweist, weist die folgende Zusammensetzung in einer Mischung auf oder besteht aus dieser:
- Ethylen-Vinylacetat-Copolymer (EVA) zu 100 phr bis 80 phr mit insgesamt zumindest 40 Gew.-% Vinylacetat-Einheiten, wobei das Ethylen-Vinylacetat-Copolymer eine Mischung mehrerer Ethylen-Vinylacetat-Copolymere mit unterschiedlichen Anteilen an Vinylacetat-Einheiten sein kann, - und wahlweise zusätzlich 0 bis 20 phr eines oder mehrerer Polyolefine, die vorzugsweise keine funktionellen Gruppen aufweisen, vorzugsweise ein Ethylen-Octen-Copolymer, insbesondere zu 0 bis 15 phr als Polymerbestandteile,
- als mineralische Inhaltsstoffe 160 bis 170 phr Kaolin, wahlweise Hartkaolin und/oder Weichkaolin,
- 25 bis 35 phr eines Carbonats oder mehrere Carbonate, insbesondere Calciumcarbonat (Kreide), sowie
- Verarbeitungshilfsmittel, z.B. zu 1 bis 5 phr, insbesondere insgesamt 4 phr, beispielsweise Stearinsäure, Zinkstearat, Mischungen aus Fettsäuren, Fettalkoholen und Fettsäureestern (z.B. Aflux 42) und Mischungen dieser,
- wahlweise bis 5 phr Paraffin,
- optional Zuschlagsstoffe, beispielsweise Farbpigmente.
Bevorzugt weist die Mischung auf oder besteht aus
- 85 bis 95 phr, bevorzugter 90 phr eines EVA oder einer Mischung von EVA mit einem Gehalt von zumindest 40 Gew.-% Vinylacetat-Einheiten, bevorzugter 42 bis 45 Gew.-% Vinylacetat-Einheiten,
- 5 bis 15 phr, bevorzugter 10 phr eines Polyolefins oder mehrerer Polyolefine, bevorzugt eines Ethylen-Octen-Copolymers,
- mineralische Inhaltsstoffe, die 160 bis 170 phr Kaolin, wahlweise Hartkaolin und/oder Weichkaolin, umfassen oder daraus bestehen,
- 25 bis 35 phr eines Carbonats oder mehrerer Carbonate, insbesondere Calciumcarbonat (Kreide), sowie
- Verarbeitungshilfsmittel, z.B. zu 1 bis 5 phr, insbesondere insgesamt 4 phr, beispielsweise Stearinsäure, Zinkstearat, Mischungen aus Fettsäuren, Fettalkoholen und Fettsäureestern (z.B. Aflux 42) und Mischungen dieser,
- wahlweise bis 5 phr Paraffin,
- optional Zuschlagsstoffe, beispielsweise Farbpigmente.

Bevorzugt weist die Mischung als organische Polymere 90 phr EVA und 10 phr eines oder mehrerer nicht funktionalisierter Polyolefine, insbesondere eines oder mehrerer Ethylen-Octen-Copolymere auf oder deren organische Polymere bestehen daraus.

Besonders bevorzugt bestehen die mineralischen Inhaltsstoffe des Kernbeilaufs aus 160 bis 170 phr Weich-Kaolin und 25 bis 35 phr Calciumcarbonat, so dass z.B. keine Kieselsäure enthalten ist.

Es hat sich gezeigt, dass die Mischung für den erfindungsgemäßen Kernbeilauf bei Erwärmung auf 600 °C bis 900 °C nicht brennbare Gase entwickelt, die zu einer signifikanten Volumenzunahme der Mischung führen, und überdies die Mischung einen festen Erwärmungsrückstand, bzw. Verbrennungsrückstand als Erwärmungsprodukt erzeugt, was auch als expandierte feste Asche bezeichnet werden kann. Durch die Volumenzunahme und die Erzeugung einer strukturell festen Asche führt ein Kernbeilauf aus der erfindungsgemäßen Mischung dazu, dass bei einer solchen Erwärmung, wie sie beispielsweise im Brandfall auftritt, stromführende Leiter voneinander getrennt bleiben, so dass trotz der Zersetzung der Isolierung des Kabels dessen Funktionsfähigkeit zumindest zeitweise, insbesondere für zumindest 30 min bis zumindest 90 min erhalten bleibt.

### Genaue Beschreibung der Erfindung

Die Erfindung wird nun mit Bezug auf die Figuren anhand von Beispielen genauer beschrieben, die in
Figur 1 einen Querschnitt durch ein beispielhaftes Kabel mit erfindungsgemäßem Kernbeilauf und
Figur 2 das Erwärmungsprodukt erfindungsgemäßer Kernbeiläufe nach Behandlung bei 900 °C zeigen.

**Tabelle 1: Mischungen für Kabelbeilauf**

| Mischung Nr. | 1 | 2 | 3 | 4 | 5 | 6 |
|---|---|---|---|---|---|---|
| EVA 50 | 50 | 60 | 70 | 80 | 80 | 90 |
| EVA 28 | 30 | 20 | 20 | 10 | 10 | 0 |
| Polyolefin | 20 | 20 | 10 | 10 | 10 | 10 |
| Stearinsäure | 2 | 2 | 2 | 2 | 2 | 2 |
| Zinkstearat | 2 | 2 | 2 | 2 | 2 | 2 |
| Paraffin | 5 | 5 | 0 | 0 | 5 | 0 |
| Kieselsäure | 10 | 10 | 0 | 0 | 0 | 0 |
| Kreide | 40 | 40 | 30 | 30 | 30 | 30 |
| Kaolin | 170 | 170 | 160 | 160 | 170 | 160 |
| Dichte | 1,65 | 1,65 | 3,82 | 4,07 | 3,94 | 4,32 |
| Summe phr | 329 | 329 | 294 | 294 | 309 | 294 |

| | | | | | | |
|---|---|---|---|---|---|---|
| EVA 50 = Ethylen-Vinylacetat-Copolymer mit 50 Gew.-% Vinylacetateinheiten, EVA 28 = Ethylen-Vinylacetat-Copolymer mit 28 Gew.-% Vinylacetateinheiten. | | | | | | |

Die in Tabelle 1 angegebenen Mischungen wurden in einer Stufe in einem 2 Liter Laborkneter mit einem Kneterfüllfaktor von 0,7 gemischt.

Aus den Mischungen wurden Kernbeiläufe als Probestücke extrudiert, die die in Tabelle 2 angegebenen Eigenschaften aufwiesen. Für die Erwärmung auf Verbrennungstemperatur (Verbrennung) wurden die Probestücke mittels eines Glühofens für 30 min auf die angegebene Temperatur in Anwesenheit von Luft erhitzt.

**Tabelle 2: Eigenschaften von Mischungen**

| Mischung Nr. | 1 | 2 | 3 | 4 | 5 | 6 |
|---|---|---|---|---|---|---|
| Härte der Asche nach Verbrennung bei 600 °C [1...3] | ok | ok | ok | ok | ok | ok |
| Volumenzunahme nach Verbrennung bei 600 °C [%] | 32 | 32 | 56 | 71 | 69 | 81 |
| Härte der Asche nach Verbrennung bei 900 °C [1...3] | ok | ok | ok | ok | ok | ok |
| Volumenzunahme nach Verbrennung bei 900 °C [%] | 32 | 32 | 60 | 71 | 69 | 81 |
| Shore A | 89 | 87 | 79 | 78 | 83 | 75 |
| Härte IRHD | 95 | 94 | 87 | 82 | 89 | 80 |
| Extrusionsverhalten | ++ | ++ | +++ | +++ | +++ | +++ |

Die Messergebnisse zeigen, dass die Mischungen 3 bis 6 gegenüber den Mischungen 1 und 2 eine deutlich höhere Volumenzunahme nach Erwärmung zeigen, sowie eine ausreichend hohe Härte bzw. Festigkeit der Asche nach Erwärmung.

Weiterhin zeigen die Mischungen 3 bis 6 ein sehr gutes Extrusionsverhalten, so dass die Mischungen 3 bis 6 erfindungsgemäß bevorzugt sind, besonders bevorzugt die Mischungen 4 bis 6 sind, und insbesondere bevorzugt die Mischung 6.

Zusätzlich konnte in der Brandprüfung nach DIN 4102, Teil 12 nachgewiesen werden, dass für Kabel mit identischem Aufbau ein Kernbeilauf aus einer erfindungsgemäßen Mischung, insbesondere aus der Mischung Nr. 6, unter jeweils identischen Prüfbedingungen bessere Ergebnisse für den Funktionserhalt erreicht werden. So wurde z.B. mit einem Kernbeilauf aus der Mischung Nr. 6 ca. 20% bessere Ergebnisse für Funktionserhalt erreicht, als mit einem Standard-Kernbeilauf ohne besondere Eigenschaften im Brandfall.

Die beispielhaften Mischungen zeigen, dass mit zunehmendem Gehalt an Vinylacetat-Einheiten in der Mischung die Volumenzunahme bei der Erwärmung ansteigt, und ebenso Mischungen mit einem Gehalt an Kreide und Kaolin, insbesondere Mischungen, deren mineralische Zuschlagsstoffe aus Kreide und Kaolin bestehen, Erwärmungsprodukte mit positiven Eigenschaften zeigen.

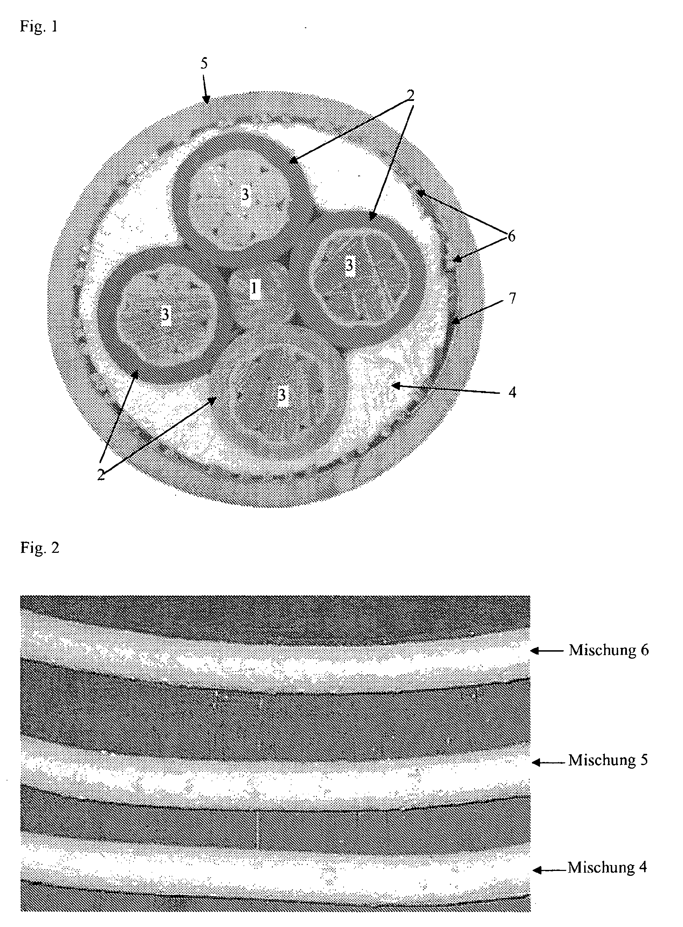

Figur 1 zeigt ein beispielhaftes Sicherheitskabel im Querschnitt, in dessen Längsmittelachse ein erfindungsgemäßer Kernbeilauf 1 angeordnet ist. Um den Kernbeilauf 1 sind von einer Isolierung 2 umgebene Leiter 3 verseilt. Der Kernbeilauf 1 mit den darum verseilten isolierten Leitern 3 ist von einem Innenmantel 4 umgeben, der wiederum von einem Außenmantel 5 eingefasst ist, wobei optional zwischen dem Außenmantel 5 und dem Innenmantel 4 ein Metallgeflecht 6 angeordnet ist.

Figur 2 zeigt Probenstücke der Kernbeiläufe aus Mischungen 4, 5 bzw. 6 nach deren Erwärmung auf 900 °C. Hier wird deutlich, dass Kernbeiläufe aus den Mischungen 4, 5 und 6 auch bei Erwärmung auf 900 °C eine mechanisch stabile Form aufweisen, die gegenüber dem nicht temperaturbehandelten Zustand, d.h. vor der Erwärmung auf 900 °C ein um ca. 70 bis 80% größeres Volumen hat.

## Patentansprüche

1. Polymermischung zur Verwendung als Kernbeilauf eines Kabels, die synthetisches Gummi aufweist, **dadurch gekennzeichnet, dass** die Polymermischung 100 phr bis 80 phr eines Ethylen-Vinylacetat-Copolymers oder einer Mischung von Ethylen-Vinylacetat-Copolymeren mit insgesamt zumindest 40 Gew.-% Vinylacetat-Einheiten,
0 bis 20 phr eines oder mehrerer Polyolefine als Polymerbestandteile, als mineralische Inhaltsstoffe 160 bis 170 phr Kaolin und
25 phr bis 35 phr eines Carbonats oder mehrerer Carbonate, sowie
1 bis 5 phr Verarbeitungshilfsmittel,
0 bis 5 phr Paraffin aufweist.

2. Polymermischung nach Anspruch 1, **dadurch gekennzeichnet, dass** die Polymerbestandteile aus 100 phr bis 80 phr eines Ethylen-Vinylacetat-Copolymers oder einer Mischung von Ethylen-Vinylacetat-Copolymeren mit insgesamt zumindest 40 Gew.-% Vinylacetat-Einheiten und 0 bis 20 phr eines oder mehrerer Polyolefine bestehen.

3. Polymermischung nach einem der voranstehenden Ansprüche, **dadurch gekennzeichnet, dass** die mineralischen Inhaltsstoffe aus 160 bis 170 phr Kaolin und 25 phr bis 35 phr eines Carbonats oder mehrerer Carbonate bestehen.

4. Polymermischung nach einem der voranstehenden Ansprüche, **dadurch gekennzeichnet, dass** Ethylen-Vinylacetat-Copolymeren zumindest 42 bis 45 Gew.-% Vinylacetat-Einheiten aufweisen.

5. Polymermischung nach einem der voranstehenden Ansprüche, **dadurch gekennzeichnet, dass** sie 1 bis 5 phr Paraffin enthält.

6. Polymermischung nach einem der voranstehenden Ansprüche, **dadurch gekennzeichnet, dass** sie nach Erwärmung auf 600 °C einen Rückstand bildet, der ein um zumindest 50 % größeres Volumen einnimmt.

7. Polymermischung nach einem der voranstehenden Ansprüche, **dadurch gekennzeichnet, dass** sie nach Erwärmung auf 600 °C einen Rückstand bildet, der ein um zumindest 69 % größeres Volumen einnimmt.

8. Polymermischung nach einem der voranstehenden Ansprüche, **dadurch gekennzeichnet, dass** das Carbonat Calciumcarbonat ist.

9. Kabel mit zumindest zwei um zumindest einen Kernbeilauf (1) verseilten isolierten Leitern (2, 3) und einem Außenmantel (5), **dadurch gekennzeichnet, dass** der Kernbeilauf (1) eine Zusammensetzung nach einem der voranstehenden Ansprüche aufweist.

10. Kabel nach Anspruch 9, **dadurch gekennzeichnet, dass** der mit den isolierten Leitern (2, 3) verseilte Kernbeilauf (1) von einem Innenmantel (4) und einem zwischen Innenmantel (4) und Außenmantel (5) angeordneten Metallgeflecht (6) umfasst ist.

11. Verfahren zur Herstellung eines Kernbeilaufs für ein Kabel, **gekennzeichnet durch** Mischen einer Zusammensetzung, die
100 phr bis 80 phr eines Ethylen-Vinylacetat-Copolymers oder einer Mischung von Ethylen-Vinylacetat-Copolymeren mit insgesamt zumindest 40 Gew.-% Vinylacetat-Einheiten,
0 bis 20 phr eines oder mehrerer Polyolefine als Polymerbestandteile,
als mineralische Inhaltsstoffe 160 bis 170 phr Kaolin und
25 phr bis 35 phr eines Carbonats oder mehrerer Carbonate, sowie
1 bis 5 phr Verarbeitungshilfsmittel,
0 bis 5 phr Paraffin aufweist und anschließendes Extrudieren der gemischten Zusammensetzung.

12. Verfahren nach Anspruch 11, **dadurch gekennzeichnet, dass** die Polymerbestandteile aus 100 phr bis 80 phr eines Ethylen-Vinylacetat-Copolymers oder einer Mischung von Ethylen-Vinylacetat-Copolymeren mit insgesamt zumindest 40 Gew.-% Vinylacetat-Einheiten und 0 bis 20 phr eines oder mehrerer Polyolefine bestehen.

13. Verfahren nach einem der Ansprüche 11 bis 12, **dadurch gekennzeichnet, dass** die mineralischen Inhaltsstoffe aus 160 bis 170 phr Kaolin und 25 phr bis 35 phr eines Carbonats oder mehrerer Carbonate bestehen.

14. Verfahren nach einem der Ansprüche 11 bis 13, **dadurch gekennzeichnet, dass** Ethylen-Vinylacetat-Copolymeren zumindest 42 bis 45 Gew.-% Vinylacetat-Einheiten aufweisen.

## Claims

1. Polymer compound for the use as a central core element of a cable, which contains synthetic rubber, **characterized In that** the polymer compound consists of 100 phr to 80 phr of an Ethylen-Vinylacetate-Copolymer or a mixture of an Ethylen-Vlnylacetate-Copolymer with together at least 40 % by weight Vinylacetate-units, 0 to 20 phr of one or several polyoleflnes as polymeringredients, 160 to 170 phr kaolin as mineral additives and 25 phr to 35 phr of one carbonats or more carbonates, as well as 1 to 5 phr processing aid, 0 to 5 phr paraffin.

2. Polymer compound according to claim 1, **characterized In that** the polymeringredients consist of 100 phr to 80 phr of an Ethylene-Vinylacetate-Copolymer or a mixture of Ethylene-Vinylacetate-Copolymers with altogether at least 40 % by weight Vinylacetate-unlts and 0 to 20 phr of one polyoleflne or more polyolefines.

3. Polymer compound according to one of the preceding claims, **characterized In that** the mineral additives consist of 160 to 170 phr kaolin and 25 phr to 35 phr of one carbonate or more carbonates.

4. Polymer compound according to one of the preceding claims, **characterized In that** the Ethylene-Vinylacetate-Copolymers comprise at least 42 to 45 % by weight Vinylacetate-units.

5. Polymer compound according to one of the preceding claims, **characterized In that** it contains 1 to 5 phr paraffin.

6. Polymer compound according to one of the preceding claims, **characterized in that** It forms a residue after heating up to 600 °C, which occupies a volume which is greater at least by 50 %.

7. Polymer compound according to one of the preceding claims, **characterized in that** it forms a residue after heating up to 600 °C, which occupies a volume which is greater by at least 69 %.

8. Polymer compound according to one of the preceding claims, **characterized In that** the carbonate Is a calciumcarbonate.

9. Cable with at least two Insulated cohductors (2,3) which are stranded around at least one core filler (1) and with an outer sheath (5), **characterized in that** the core filler (1) has a composition according to one of the preceding claims.

10. Cable according to claim 9, **characterized in that** the core filler (1) which is stranded with the insulated conductors (2,3) Is surrounded by an Inner sheath (4) and a metal mesh (6) which is positioned between the inner sheath (4) and the outer sheath (5).

11. Method for the manufacturing of a core filler for a cable, **characterized by** mixing of a composition which consists of 100 phr to 80 phr of an Ethylen-Vinylacetate-Copolymer or a mixture of an Ethylen-Vinylacetate-Copolymer with together at least 40 % by weight Vlnylacetate-unlts, 0 to 20 phr of one or several polyoleflnes as polymeringredients, 160 to 170 phr kaolin as mineral additives and 25 phr to 35 phr of one carbonate or more carbonates, as well as 1 to 5 phr processing aid, 0 to 5 phr paraffin and by the following step of extrusion of the composition..

12. Method according to claim 11, **characterized in that** the polymeringredients consist of 100 phr to 80 phr of an Ethylene-vinylacetate-Copolymer or a mixture of Ethylene-Vinylacetate-Copolymers with altogether at least 40 % by weight Vlnylacetate-units and 0 to 20 phr of one polyoleflne or more polyolefines.

13. Method according to claim 11 or 12, **characterized In that** the mineral additives consist of 160 to 170 phr kaolin and 25 phr to 35 phr of one carbonate or more carbonates..

14. Method according to one of the claims 11 to 13, **characterized in that** the Ethylene-Vinylacetate-Copolymers comprise at least 42 to 45 % by weight Vinylacetate-units.

## Revendications

1. Mélange de polymères destiné à une utilisation en tant que bourrage de noyau d'un câble, qui comprend un caoutchouc synthétique, **caractérisé en ce que** le mélange de polymères comprend 100 pce à 80 pce d'un copolymère éthylène-acétate de vinyle ou d'un mélange de copolymères éthylène-acétate de vinyle contenant au total au moins 40 % en poids d'unités acétate de vinyle,
0 à 20 pce d'une ou de plusieurs polyoléfines en tant que constituants polymères,
en tant que composants minéraux, 160 à 170 pce de kaolin et
25 pce à 35 pce d'un carbonate ou de plusieurs carbonates, ainsi que 1 à 5 pce d'adjuvants d'usinage, 0 à 5 pce de paraffine.

2. Mélange de polymères selon la revendication 1, **caractérisé en ce que** les constituants polymères sont constitués par 100 pce à 80 pce d'un copolymère éthylène-acétate de vinyle ou d'un mélange de copolymères éthylène-acétate de vinyle contenant au total au moins 40 % en poids d'unités acétate de vinyle, et 0 à 20 pce d'une ou de plusieurs polyoléfines.

3. Mélange de polymères selon l'une quelconque des revendications précédentes, **caractérisé en ce que** les composants minéraux sont constitués par 160 à 170 pce de kaolin et 25 pce à 35 pce d'un carbonate ou de plusieurs carbonates.

4. Mélange de polymères selon l'une quelconque des revendications précédentes, **caractérisé en ce que** les copolymères éthylène-acétate de vinyle comprennent au moins 42 à 45 % en poids d'unités acétate de vinyle.

5. Mélange de polymères selon l'une quelconque des revendications précédentes, **caractérisé en ce qu'**il contient 1 à 5 pce de paraffine.

6. Mélange de polymères selon l'une quelconque des revendications précédentes, **caractérisé en ce qu'**il forme après chauffage à 600 °C un résidu qui occupe un volume au moins 50 % plus grand.

7. Mélange de polymères selon l'une quelconque des revendications précédentes, **caractérisé en ce qu'**il forme après chauffage à 600 °C un résidu qui occupe un volume au moins 69 % plus grand.

8. Mélange de polymères selon l'une quelconque des revendications précédentes, **caractérisé en ce que** le carbonate est le carbonate de calcium.

9. Câble comprenant au moins deux conducteurs isolés (2, 3) câblés autour d'au moins un bourrage de noyau (1) et une enveloppe extérieure (5), **caractérisé en ce que** le bourrage de noyau (1) présente une composition selon l'une quelconque des revendications précédentes.

10. Câble selon la revendication 9, **caractérisé en ce que** le bourrage de noyau (1) câblé avec les conducteurs isolés (2, 3) est entouré par une enveloppe intérieure (4) et un treillis métallique (6) agencé entre l'enveloppe intérieure (4) et l'enveloppe extérieure (5).

11. Procédé de fabrication d'un bourrage de noyau pour un câble, **caractérisé par** le mélange d'une composition qui comprend 100 pce à 80 pce d'un copolymère éthylène-acétate de vinyle ou d'un mélange de copolymères éthylène-acétate de vinyle contenant au total au moins 40 % en poids d'unités acétate de vinyle,
0 à 20 pce d'une ou de plusieurs polyoléfines en tant que constituants polymères,
en tant que composants minéraux, 160 à 170 pce de kaolin et
25 pce à 35 pce d'un carbonate ou de plusieurs carbonates, ainsi que
1 à 5 pce d'adjuvants d'usinage,
0 à 5 pce de paraffine,
puis l'extrusion de la composition mélangée.

12. Procédé selon la revendication 11, **caractérisé en ce que** les constituants polymères sont constitués par 100 pce à 80 pce d'un copolymère éthylène-acétate de vinyle ou d'un mélange de copolymères éthylène-acétate de vinyle contenant au total au moins 40 % en poids d'unités acétate de vinyle, et 0 à 20 pce d'une ou de plusieurs polyoléfines.

13. Procédé selon l'une quelconque des revendications 11 à 12, **caractérisé en ce que** les composants minéraux sont constitués par 160 à 170 pce de kaolin et 25 pce à 35 pce d'un carbonate ou de plusieurs carbonates.

14. Procédé selon l'une quelconque des revendications 11 à 13, **caractérisé en ce que** les copolymères éthylène-acétate de vinyle comprennent au moins 42 à 45 % en poids d'unités acétate de vinyle.
